(19) **Europäisches Patentamt / European Patent Office / Office européen des brevets**

(11) **EP 4 471 458 A1**

(12) **EUROPEAN PATENT APPLICATION**
published in accordance with Art. 153(4) EPC

(43) Date of publication:
04.12.2024 Bulletin 2024/49

(21) Application number: 22923091.7

(22) Date of filing: 14.04.2022

(51) International Patent Classification (IPC):
$G01S\ 13/58\ ^{(2006.01)}$     $G06F\ 17/18\ ^{(2006.01)}$

(86) International application number:
PCT/CN2022/086844

(87) International publication number:
WO 2023/142273 (03.08.2023 Gazette 2023/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.01.2022 CN 202210110645

(71) Applicant: Nanjing Hawkeye Technology Co., Ltd
Nanjing, Jiangsu 211111 (CN)

(72) Inventors:
• GUO, Kunpeng
  Nanjing, Jiangsu 211111 (CN)
• WU, Jing
  Nanjing, Jiangsu 211111 (CN)
• MAI, Jianchun
  Nanjing, Jiangsu 211111 (CN)
• XIA, Han
  Nanjing, Jiangsu 211111 (CN)
• FENG, Youhuai
  Nanjing, Jiangsu 211111 (CN)
• ZHANG, Liao
  Nanjing, Jiangsu 211111 (CN)

(74) Representative: Nederlandsch Octrooibureau
P.O. Box 29720
2502 LS The Hague (NL)

(54) **MOVING TARGET SPEED AMBIGUITY RESOLUTION METHOD AND APPARATUS, AND ELECTRONIC DEVICE AND STORAGE MEDIUM**

(57)     Disclosed in the present invention are a moving target speed ambiguity resolution method and apparatus, and an electronic device and a storage medium. The method comprises : driving a first target transmit antenna and a second target transmit antenna, transmission timings of which are adjacent, to each transmit pulse signals twice in the same pulse sequence, wherein a signal period of each pulse signal corresponding to the first target transmit antenna is different from a signal period of each pulse signal corresponding to the second target transmit antenna; according to echo signals, acquiring a first actually measured motion phase difference which corresponds to the first target transmit antenna and a second actually measured motion phase difference which corresponds to the second target transmit antenna; calculating a Doppler frequency of a moving target according to the two phase differences; and calculating the current speed of the moving target according to the Doppler frequency. By means of the technical solution provided in the present invention, the technical problem in the prior art of it being difficult to accurately measure the speed of a moving target, which is caused by the moving target spanning a plurality of distance units within an echo accumulation time during radar speed measurement and a corresponding Doppler response exceeding a frequency range such that an ambiguity is generated, can be solved.

Driving a first target transmit antenna and a second target transmit antenna, having adjacent transmission timings, of a plurality of transmit antennas of a radar to each continuously transmit pulse signals twice in a same pulse sequence, where a signal period of one of the pulse signals twice transmitted by the first target transmit antenna is different from a signal period of one of the pulse signals twice transmitted by the second target transmit antenna — 101

Obtaining a first measured moving phase difference corresponding to the first target transmit antenna and a second measured moving phase difference corresponding to the second target transmit antenna according to echo signals fed back by the same moving target — 102

Calculating a Doppler frequency of the moving target according to the first measured moving phase difference and the second measured moving phase difference — 103

Calculating a current speed of the moving target according to the Doppler frequency — 104

FIG. 1

## Description

### TECHNICAL FIELD

The present disclosure relates to the field of radar signal processing technologies, and more particularly, to a moving target speed defuzzification method and apparatus, an electronic device, and a storage medium.

### BACKGROUND

In the field of wireless communication, an antenna technology is widely used in the field of mobile Internet of Things because it can multiply the throughput, transmission distance, and spectrum utilization of a communication system without increasing bandwidth. In recent years, in order to improve detection performance and calculation precision of a radar, an Multiple-Input Multiple-Output (MIMO) technology has been widely applied to the radar. The MIMO technology means that a plurality of transmit antennas are used at a transmit end and a plurality of receive antennas are used at a receive end, and a signal is transmitted on a plurality of channels formed between the transmit end and the receive end, so that space resources can be fully utilized, system channel capacity can be improved, and communication quality can be improved.

An MIMO radar speed measurement system transmits mutually orthogonal pulse signals that do not interfere with each other through each array element of a transmit array to detect a moving direction and a moving speed of a moving target by using frequency shift amount of an echo signal for each of the pulse signals. However, in the related art, when the MIMO radar speed measurement system is used for speed measurement, there may be technical problems that the speed is fuzzy and the range of speed measurement is small.

On the one hand, when a pulsed Doppler radar operates at low and medium repetition frequencies, a high speed moving observation target may be moved across a plurality of distance units for the echo accumulation time, that is, the moving target has crossed the plurality of distance units in the angle estimation process, a waveform generates a phase difference, and the corresponding Doppler effect exceeds a frequency range to produce fuzzification, which results in an inaccurate speed of the moving target parsed from a fuzzy Doppler image, that is, it is difficult to accurately measure a real speed of the moving target.

On the other hand, according to the conventional MIMO radar-based speed measurement method, when the number of transmit antennas is larger, the maximum unambiguous speed range that can be measured becomes smaller, and the speed measurement requirement for a high-speed moving target cannot be met.

### TECHNICAL PROBLEMS

The present disclosure provides a moving target speed defuzzification method and apparatus, an electronic device, and a storage medium, which aim to effectively solve the technical problems in the related art that the high-speed moving observation target can be moved across the plurality of distance units for the echo accumulation time, and the waveform generates the phase difference, so that it is difficult to accurately measure the real speed of the moving target.

### TECHNICAL SOLUTIONS

According to one aspect of the present disclosure, there is provided a moving target defuzzification method, including:

driving a first target transmit antenna and a second target transmit antenna, having adjacent transmission timings, of a plurality of transmit antennas of a radar to each continuously transmit pulse signals twice in a same pulse sequence, where a signal period of one of the pulse signals twice transmitted by the first target transmit antenna is different from a signal period of one of the pulse signals twice transmitted by the second target transmit antenna;
obtaining a first measured moving phase difference corresponding to the first target transmit antenna and a second measured moving phase difference corresponding to the second target transmit antenna according to one or more echo signals fed back by the same moving target;
calculating a Doppler frequency of the moving target according to the first measured moving phase difference and the second measured moving phase difference; and
calculating a current speed of the moving target according to the Doppler frequency.

Further, the obtaining of the first measured moving phase difference and the second measured moving phase difference includes:

generating a Range-Doppler image of the channels corresponding to the first target transmit antenna and a Range-Doppler image of the channels corresponding to the second target transmit antenna according to the echo signals to perform non-coherent accumulation on the Range-Doppler images;

obtaining first target distance Doppler unit position data of the moving target in the channels corresponding to the first target transmit antenna and second target distance Doppler unit position data of the moving target in the channels corresponding to the second target transmit antenna from the non-coherent accumulated Range-Doppler images; and

obtaining the first measured moving phase difference according to complex data of the first target distance Doppler unit position data and the second measured moving phase difference according to complex data of the second target distance Doppler unit position data.

Further, the obtaining of the first measured moving phase difference according to the complex data of the first target distance Doppler unit position data and the second measured moving phase difference according to the complex data of the second target distance Doppler unit position data includes:

obtaining a plurality of moving phase differences for the channels corresponding to the first target transmit antenna according to the complex data of the first target distance Doppler unit position data in the channels to use an average value of the plurality of moving phase differences as the first measured moving phase difference; and

obtaining a plurality of moving phase differences for the channels corresponding to the second target transmit antenna according to the complex data of the second target distance Doppler unit position data in the channels to use an average value of the plurality of moving phase differences as the second measured moving phase difference.

Further, the obtaining of the plurality of moving phase differences for the channels corresponding to the first target transmit antenna includes:

for the channels corresponding to the first target transmit antenna, calculating the first measured moving phase difference $\psi_1$ according to following equation if complex data of target distance Doppler unit position data of the channels corresponding to a first pulse signal of the pulse signals twice transmitted by the first target transmit antenna are respectively represented as $\alpha_1, \alpha_2, \alpha_3, \cdots, \alpha_n$ and complex data of target distance Doppler unit position data of the channels corresponding to a second pulse signal of the pulse signals twice transmitted by the first target transmit antenna are respectively represented as $\beta_1, \beta_2, \beta_3, \cdots, \beta_n$:

$$\psi_1 = \frac{\beta_1 \cdot \alpha_1^* + \beta_2 \cdot \alpha_2^* + \cdots + \beta_n \cdot \alpha_n^*}{n},$$

where, "*" is a conjugate operation, and n is the total number of channels corresponding to the first target transmit antenna.

Further, the obtaining of the plurality of moving phase differences for the channels corresponding to the second target transmit antenna includes:

for the channels corresponding to the second target transmit antenna, calculating the second measured moving phase difference $\psi_2$ according to following equation if complex data of target distance Doppler unit position data of the channels corresponding to a first pulse signal of the pulse signals twice transmitted by the second target transmit antenna are respectively represented as $\chi_1, \chi_2, \chi_3, \cdots, \chi_n$ and complex data of target distance Doppler unit position data of the channels corresponding to a second pulse signal of the pulse signals twice transmitted by the second target transmit antenna are respectively represented as $\delta_1, \delta_2, \delta_3, \cdots, \delta_n$:

$$\psi_2 = \frac{\chi_1 \cdot \delta_1^* + \chi_2 \cdot \delta_2^* + \cdots + \chi_n \cdot \delta_n^*}{n},$$

where, "*" is a conjugate operation, and n is the total number of channels corresponding to the second target transmit antenna.

Further, the calculating of the Doppler frequency of the moving target according to the first measured moving phase difference and the second measured moving phase difference includes:

calculating a differential phase difference according to following equation:

$$\Delta\psi = \psi_1^* \cdot \psi_2,$$

where, $\Delta\psi$ represents the differential phase difference, $\psi_1$ represents the first measured moving phase difference, $\psi_2$ represents the second measured moving phase difference, and "*" is a conjugate operation.

Further, the calculating of the Doppler frequency of the moving target according to the first measured moving phase difference and the second measured moving phase difference further includes:

calculating a phase angle of the differential phase difference; and
calculating the Doppler frequency of the moving target according to the phase angle.

Further, the calculating of the Doppler frequency of the moving target according to the first measured moving phase difference and the second measured moving phase difference further includes:
calculating the Doppler frequency of the moving target according to following equation:

$$ f_d = \frac{angle(\Delta\psi)}{2 \cdot \pi \cdot \Delta T} , $$

where, $f_d$ represents the Doppler frequency of the moving target, and a function of angle() is to return a phase angle of a vector in radians, $\Delta\psi$ represents the differential phase difference, and $\Delta T$ represents a difference between different signal periods of pulse signals, having the different signal periods, among the pulse signals twice transmitted by the first target transmit antenna and the pulse signals twice transmitted by the second target transmit antenna.

Further, the calculating of the current speed of the moving target according to the Doppler frequency includes:
calculating the current speed of the moving target according to following equation:

$$ V = -f_d \cdot \lambda / 2 , $$

where, V represents the current speed of the moving target, $f_d$ represents the Doppler frequency of the moving target, and $\lambda$ is the wavelength.

According to another aspect of the present disclosure, there is provided a moving target speed defuzzification apparatus applied to an MIMO radar, including:

a signal transmitting module for driving a first target transmit antenna and a second target transmit antenna, having adjacent transmission timings, of a plurality of transmit antennas of a radar to each continuously transmit pulse signals twice in a same pulse sequence, where a signal period of one of the pulse signals twice transmitted by the first target transmit antenna is different from a signal period of one of the pulse signals twice transmitted by the second target transmit antenna;
a moving phase difference obtaining module for obtaining a first measured moving phase difference corresponding to the first target transmit antenna and a second measured moving phase difference corresponding to the second target transmit antenna according to echo signals fed back by the same moving target;
a Doppler frequency calculating module for calculating a Doppler frequency of the moving target according to the first measured moving phase difference and the second measured moving phase difference; and
a speed calculating module for calculating a current speed of the moving target according to the Doppler frequency.

According to yet another aspect of the present disclosure, there is further provided an electronic device, including: a memory, a processor, and a computer program stored on the memory and executable on the processor, where the computer program, when executed by the processor, implements operations of any one of the moving target speed defuzzification methods of the above-mentioned first aspect.

According to yet another aspect of the present disclosure, there is further provided a non-transitory computer readable storage medium having stored thereon a computer program which, when executed by a processor, implements operations of any one of the moving target speed defuzzification methods of the above-mentioned first aspect.

**BENEFICIAL EFFECTS**

Following technical effects can be achieved at least by one or more of the above embodiments of the present disclosure:
in the technical solution disclosed in the present disclosure, an MIMO radar system adopts a time division transmission mode in which two transmit antennas having adjacent transmission timings each continuously transmits pulse signals twice, obtains measured moving phase differences corresponding to the two antennas according to echo signals returned for the pulse signals on the moving target, and then calculates a current speed of the moving target according to the phase differences, where the two transmit antennas having adjacent transmission timings each continuously transmit the pulse signals twice, so that, for each target transmit antenna, array elements corresponding to echo signals for the twice transmitted pulse signals do not have phase difference caused by array element spacing, and a channel phase difference of the echo signals corresponding to the moving target is only a phase difference caused by a moving speed of the moving target. As a result, the speed measurement method provided by the present disclosure can directly calculate the current speed of the moving target with the measured moving phase differences of the echo signals without association with the array element spacing, can effectively improve the accuracy of the speed measurement, expand the speed measurement range, simplify the speed measurement calculation process, and achieve the technical effect of optimizing the speed measurement performance of the MIMO radar

## DESCRIPTION OF THE DRAWINGS

Technical solutions and other beneficial effects of the present disclosure are apparent below from detailed description of the embodiments of the present disclosure in combination with the accompanying drawings.

FIG. 1 is a flowchart showing steps of a moving target speed defuzzification method according to some embodiments of the present disclosure.
FIG. 2 is a waveform diagram of a pulse sequence in a time division transmission mode according to some embodiments of the present disclosure.
FIG. 3 is a schematic structural diagram of a motion target speed defuzzification apparatus according to some embodiments of the present disclosure.

## DETAILED DESCRIPTION

Technical solutions in embodiments of the present disclosure will be clearly and completely described below in conjunction with drawings in the embodiments of the present disclosure. Obviously, the described embodiments are only a part of embodiments of the present disclosure, rather than all the embodiments. Any ordinarily skilled person in the technical field of the present disclosure could still obtain other accompanying drawings without use laborious invention based on the present accompanying drawings.

It should be noted in the description of the present disclosure that the term "and/or" herein, unless expressly stated and defined otherwise, is merely an association relationship describing associated objects, meaning that there may be three relationships. For example, A and/or B may mean that A alone, both A and B, and B alone, are present, respectively. In addition, a character "/", without special explanation, generally indicates that associated objects have an "or" relationship;

The following describes technical terms to which the present disclosure relates.

The Multiple-Input Multiple-Output (MIMO) technology means that a plurality of transmit antennas are used at a transmit end and a plurality of receive antennas are used at a receive end, and a signal is transmitted on a plurality of channels, thereby improving communication quality. It is possible to make full use of space resources and multiply system channel capacity by multiple antennas implementing multiple transmission and multiple reception without increasing frequency spectrum resources and antenna transmit power.

Tim Division Multiplexing (TDM) technology means a communication technology in which different signals are interleaved with each other in different time periods, transmitted along the same channel, and then are extracted and restored to original signals at a receiving end. This technology may be used to transmit multiple signals on the same channel.

For the moving target, speed fuzzification in the radar speed measurement refers to a phenomenon in which it is difficult to distinguish a real speed of a target due to confusion of the measured target speeds caused by the phenomenon of overlapping of frequency spectrum when the pulsed Doppler radar operates at low and medium repetition frequencies.

For example, in a radar system employing the TDM technology, the maximum unambiguous speed is calculated according to following equation:

$$V_{\max} = \frac{\lambda}{4} \cdot PRF$$

,

where, $V_{\max}$ is the maximum unambiguous speed, $\lambda$ is a wavelength, and $PRF$ is a pulse repetition frequency.

Assuming that the number of transmit antennas of the MIMO radar is N, a period of a single Chirp signal is $T_c$, and the radar system adopts a time division transmission manner to transmit a pulse signal, the total time of each transmit

5

antenna transmitting a waveform is $N \cdot T_c$, which is defined as one pulse sequence period, and the pulse repetition frequency is the reciprocal of the pulse sequence period, and the pulse repetition frequency is calculated according to following equation:

$$PRF = \frac{1}{N \cdot T_c},$$

it can be found from the calculation equation of the pulse repetition frequency that, when there are more transmit antennas of the MIMO radar, corresponding pulse repetition frequency is smaller, the unambiguous speed range which can be characterized by the radar system $-V_{max} \sim V_{max}$ may be smaller, and a larger deviation easy occurs in the detection of the high speed moving target.

In view of the above technical problems, the present disclosure proposes an improved moving target speed defuzzification method and apparatus, an electronic device, and a storage medium. in the technical solution disclosed in the present disclosure, for the same target transmit antenna, because array elements corresponding to echo signals for the twice transmitted pulse signals do not have phase difference caused by array element spacing, a channel phase difference of twice transmitted target echo signals is only a phase difference caused by a moving speed of the moving target. Thus, according to the technical solution of the present disclosure, the maximum unambiguous speed range of the moving target measured by the radar can be expanded, and the accuracy of measuring the speed of the moving target can be effectively improved.

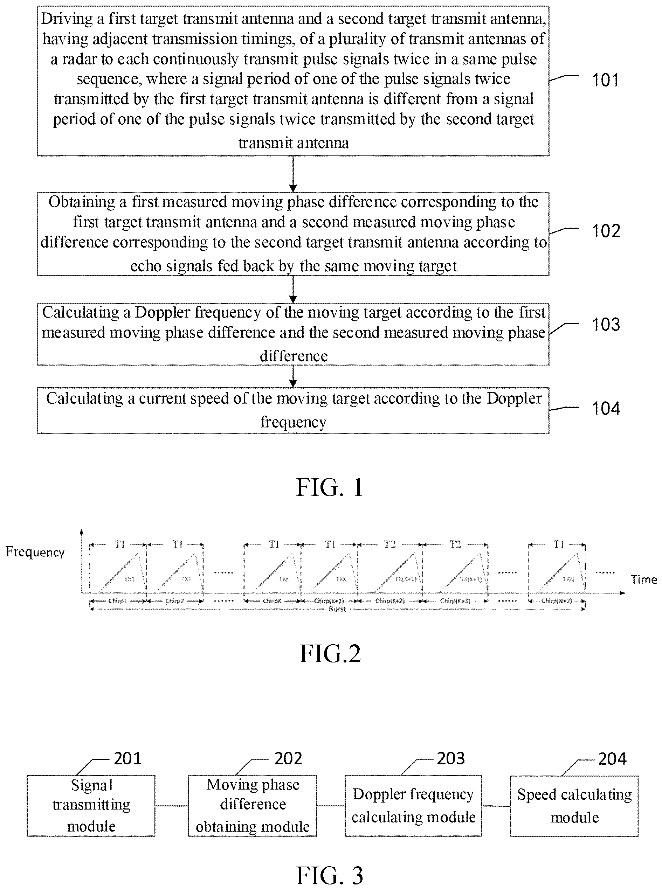

A moving target speed defuzzification method and apparatus, an electronic device, and a storage medium of the present disclosure are described below with reference to FIGS. 1 to 3.

As shown in FIG. 1, which is a flowchart showing steps of a moving target speed defuzzification method according to some embodiments of the present disclosure. The moving target speed defuzzification method may include:

step 101 of driving a first target transmit antenna and a second target transmit antenna, having adjacent transmission timings, of a plurality of transmit antennas of a radar to each continuously transmit pulse signals twice in a same pulse sequence, where a signal period of one of the pulse signals twice transmitted by the first target transmit antenna is different from a signal period of one of the pulse signals twice transmitted by the second target transmit antenna;

step 102 of obtaining a first measured moving phase difference corresponding to the first target transmit antenna and a second measured moving phase difference corresponding to the second target transmit antenna according to echo signals fed back by the same moving target;

step 103 of calculating a Doppler frequency of the moving target according to the first measured moving phase difference and the second measured moving phase difference; and

step 104 of calculating a current speed of the moving target based on the Doppler frequency.

The above-described steps 101-104 may be described in detail below.

In the above-described step 101, a first target transmit antenna and a second target transmit antenna, having adjacent transmission timings, of a plurality of transmit antennas of a radar may be driven to each continuously transmit pulse signals twice in a same pulse sequence, where a signal period of one of the pulse signals twice transmitted by the first target transmit antenna is different from a signal period of one of the pulse signals twice transmitted by the second target transmit antenna.

Illustratively, in an MIMO radar system, a pulse sequence may be transmitted in a time division transmission mode, and the time required for all antennas to sequentially transmit pulse signals once is one Burst period (i.e., a period of one pulse sequence), and the time of one Burst period is divided into a plurality of Chirp signal periods, where the plurality of Chirp signal periods in the one Burst period may be the same or different, and only one antenna transmits a pulse signal in each of the Chirp signal periods.

In the same pulse sequence, i.e., one Burst period, a first target transmit antenna and a second target transmit antenna, which are adjacent to each other in transmission timing, may be arbitrarily selected from N transmit antennas of the radar system to transmit pulse signals twice. That is, in four consecutive Chirp signal periods, the first target transmit antenna transmits a first pulse signal in a first Chirp signal period and transmits a second pulse signal in a second Chirp signal period, and the second target transmit antenna transmits a third pulse signal in a third Chirp signal period and transmits a fourth pulse signal in a fourth Chirp signal period. Where a signal period of one of the pulse signals twice transmitted by the first target transmit antenna is different from a signal period of one of the pulse signals twice transmitted by the second target transmit antenna. Specifically, each of the first Chirp signal period and the second Chirp signal period may be set to be one time period, and each of the third Chirp signal period and the fourth Chirp signal period may be set to be another different time period. Each of the first Chirp signal period, the second Chirp signal period, and the third Chirp signal period may be set to be one time period, and the fourth Chirp signal period may be set to be another different time period. In other words, for the pulse signals transmitted by the first target transmit antenna and the second target transmit antenna, when the Chirp signal periods are different, waveforms of the pulse signals are the same, but the idle time before the pulse signals corresponding to the Chirp signal periods are different.

For example, FIG. 2 is a waveform diagram of a pulse sequence period in a time division transmission mode according to some embodiments of the present disclosure. In FIG. 2, there are (N+2) Chirp signal periods in one Burst period. Adjacent transmit antennas K and (K+1) each occupy two Chirp signal periods and transmit pulse signals twice, and each of other transmit antennas occupies only one Chirp signal period and transmits one pulse signal. As shown in FIG. 2, the Chirp signal periods corresponding to the transmit antenna K are different from the Chirp signal periods corresponding to the transmit antenna (K+1), a time period for each of the Chirp(K) signal period and the Chirp(K+1) signal period corresponding to the transmit antenna K is T1, and a time period for each of the Chirp(K+2) signal period and the Chirp(K+3) signal period corresponding to the transmit antenna (K + 1) is T2. Where, the waveform of each of the pulse signals is the same in the Burst period. However, when the Chirp signal periods are different, the idle time before the pulse signals corresponding to the Chirp signal periods are different.

In the step 102, a first measured moving phase difference corresponding to the first target transmit antenna and a second measured moving phase difference corresponding to the second target transmit antenna may be obtained according to echo signals fed back by the same moving target.

Illustratively, for the same target transmit antenna, because array elements corresponding to echo signals for the twice transmitted pulse signals do not have phase difference caused by array element spacing, a channel phase difference of twice transmitted target echo signals is only a phase difference caused by a moving speed of the moving target. Therefore, the first measured moving phase difference generated by the two pulse signals corresponding to the first target transmit antenna can be calculated according to the echo signals fed back by the two transmitted pulse signals of the first target transmit antenna on the same moving target. Similarly, the second measured moving phase difference generated by the two pulse signals corresponding to the second target transmit antenna can be calculated according to the echo signals fed back by the two transmitted pulse signals of the second target transmit antenna on the same moving target.

In the step 103, a Doppler frequency of the moving target may be calculated according to the first measured moving phase difference and the second measured moving phase difference.

Illustratively, a differential phase difference between the echo signals returned on the moving target by the pulse signals transmitted by the first target transmit antenna and the second target transmit antenna can be derived from the first measured moving phase difference and the second measured moving phase difference, and the Doppler frequency can be calculated by the differential phase difference.

In the step 104, a current speed of the moving target may be calculated according to the Doppler frequency.

Illustratively, in the MIMO radar system, a moving direction and a moving speed of the moving target may be detected by using frequency shift amount of an echo signal for each of the pulse signals. Specifically, the phase difference can be calculated according to the echo signals, the Doppler frequency can be calculated according to the phase difference, and when the Doppler frequency is obtained, the current speed of the moving target can be obtained according to related calculation equation.

In the present embodiment, two transmit antennas having adjacent transmission timings each continuously transmit pulse signals twice, array elements corresponding to echo signals of the twice transmitted pulse signals do not have a phase difference caused by array element spacing, and a channel phase difference of each of the echo signals corresponding to the moving target is only a phase difference caused by the moving speed of the moving target. Therefore, the current speed of the moving target can be directly calculated by the channel phase difference of the echo signals without association with the array element spacing, so that speed ambiguity can be effectively solved, accuracy of speed measurement is improved, a speed measurement range is expanded, and complexity of speed measurement calculation is simplified.

Further, the step 102 of obtaining of the first measured moving phase difference and the second measured moving phase difference may include following steps 1021-1023.

In the step 1021, a Range-Doppler image of the channels corresponding to the first target transmit antenna and a Range-Doppler image of the channels corresponding to the second target transmit antenna may be generated according to the echo signals to perform non-coherent accumulation on the Range-Doppler images.

Illustratively, in the MIMO radar system, a channel for transmitting and receiving a pulse signal is formed between each of transmit antennas and corresponding one of receiving antennas, and when the pulse signal on the channel reaches the moving target, the moving target returns an echo signal to the radar. The radar system obtains echo signals on all of channels and constructs a Range-Doppler image from the echo signals. The Range-Doppler image includes position data of the moving object on each of the channels.

The above steps in the method disclosed in the present disclosure further include obtaining, from the Range-Doppler image, a Range-Doppler image of the channels corresponding to the first target transmit antenna and a Range-Doppler image of the channels corresponding to the second target transmit antenna. For example, when the radar system has N transmit antennas and M receive antennas, an echo signal corresponding to each of pulse signals transmitted by the first target transmit antenna is received by the M receive antennas, that is, one pulse signal corresponds to M channels, and two pulse signals correspond to 2M channels. When the speed of the moving target is calculated, it is necessary to obtain, from the Range-Doppler image, a Range-Doppler image of the M channels corresponding to the first target transmit antenna and a Range-Doppler image of the M channels corresponding to the second target transmit antenna, to perform non-coherent accumulation on corresponding data in the obtained Range-Doppler images. Where, the Range-Doppler (RD) imaging algorithm is an algorithm for Synthetic Aperture Radar (SAR) imaging and used to output compressed data by performing range compression, azimuth Fast Fourier Transform (FFT), range migration correction, azimuth compression, and azimuth Inverse Fast Fourier Transform (IFFT) processing on the echo signals.

For example, for a moving target, the radar system transmits a pulse signal according to the waveform of FIG. 2, and performs distance-dimensional sampling on the echo signal within each of the Chirp signal periods, and the number of distance-dimensional sampling points is Nr. If the number of receive antennas is 16 in each of the Chirp signal periods, the 16 receive antennas obtain 16 channels of one-dimensional data in total, and the same Burst waveform is transmitted Na for one cycle to obtain one frame of data. Therefore, the first transmission of the transmit antenna K obtains 16 channels of two-dimensional data of Nr*Na. Similarly, the second transmission of the transmit antenna K, the first transmission of the transmit antenna (K+1), and the second transmission of the transmit antenna (K + 1) all obtain 16 channels of two-dimensional data of Nr*Na.

The 16 channels of data obtained from the first transmission of the transmit antenna K may be respectively subjected to two-dimensional FFT processing to obtain 16 Range-Doppler images, and non-coherent accumulation may be performed on the Range-Doppler images. Similarly, the 16 channels of two-dimensional data of Nr*Na obtained from each of the second transmission of the transmit antenna K, the first transmission of the transmit antenna (K+1), and the second transmission of the transmit antenna (K + 1) may be respectively subjected to two-dimensional FFT processing to obtain 16 Range-Doppler images, and non-coherent accumulation may be performed on the Range-Doppler images.

At step 1022, first target distance Doppler unit position data of the moving target in the channels corresponding to the first target transmit antenna and second target distance Doppler unit position data of the moving target in the channels corresponding to the second target transmit antenna may be obtained from the non-coherent accumulated Range-Doppler images.

Illustratively, the step 1022 may include: performing Constant False-Alarm Rate (CFAR) detection processing on the non-coherent accumulated Range-Doppler images to obtain unit position data of Range-Doppler unit corresponding to the moving target. Where, the CFAR detection technology is a technology for a radar system to determine whether there is a signal for the moving target by judging a signal and noise output by a receiver while keeping a false alarm probability constant. In the radar system, there are noises such as atmospheric noise, man-made noise, internal noise, and clutter at the output of the receiver, and the signals are generally superimposed on the noises. Therefore, it is necessary to use a detection technology to determine whether there is a signal for the moving target under the conditions of the noise or the noise plus the signal output by the receiver.

At step 1023, the first measured moving phase difference may be obtained according to complex data of the first target distance Doppler unit position data and the second measured moving phase difference may be obtained according to complex data of the second target distance Doppler unit position data.

Illustratively, the measured complex data of the position data of the target Range-Doppler unit of the channels in the Range-Doppler image in the MIMO radar system may be processed according to related calculation equation to obtain the measured moving phase difference.

Further, the step 1023 of obtaining of the first measured moving phase difference according to the complex data of the first target distance Doppler unit position data and the second measured moving phase difference according to the complex data of the second target distance Doppler unit position data may include:
obtain a plurality of moving phase differences for the channels corresponding to the first target transmit antenna according to the complex data of the first target distance Doppler unit position data in the channels to use an average value of the plurality of moving phase differences as the first measured moving phase difference; and obtain a plurality of moving phase differences for the channels corresponding to the second target transmit antenna according to the complex data of the second target distance Doppler unit position data in the channels to use an average value of the plurality of moving phase differences as the second measured moving phase difference.

Illustratively, an echo signal of the moving target may be received by a plurality of receive antennas, and the first measured moving phase difference corresponding to the first target transmit antenna may be calculated by: first obtaining complex data of first target distance Doppler unit position data in the channels corresponding to the first target transmit antenna, then calculating a plurality of moving phase differences corresponding to the channels of the first target transmit antenna, and finally averaging the plurality of moving phase differences to obtain an average value of the plurality of moving phase differences and use the average value as the first measured motion phase difference. Similarly, the second measured moving phase difference corresponding to the second target transmit antenna may be obtained.

Further, the obtaining of the plurality of moving phase differences for the channels corresponding to the first target transmit antenna includes:

for the channels corresponding to the first target transmit antenna, calculating the first measured moving phase difference $\psi_1$ according to following equation if complex data of target distance Doppler unit position data of the channels corresponding to a first pulse signal of the pulse signals twice transmitted by the first target transmit antenna are respectively represented as $\alpha_1, \alpha_2, \alpha_3, \cdots, \alpha_n$ and complex data of target distance Doppler unit position data of the channels corresponding to a second pulse signal of the pulse signals twice transmitted by the first target transmit antenna are respectively represented as $\beta_1, \beta_2, \beta_3, \cdots \beta_n$:

$$\psi_1 = \frac{\beta_1 \cdot \alpha_1^* + \beta_2 \cdot \alpha_2^* + \cdots + \beta_n \cdot \alpha_n^*}{n}$$,

where, "*" is a conjugate operation, and n is the total number of channels corresponding to the first target transmit antenna. Where two complex numbers whose real parts are equal and whose imaginary parts are opposite to each other are conjugate complex numbers, and if a conjugate operation is performed on one complex number, a conjugate complex number whose real parts are unchanged and imaginary parts are changed can be obtained. For example, if a and b are real numbers and the complex number z=a+bj, then the conjugate complex number of the complex number z is z*=a-bj.

Further, the obtaining of the plurality of moving phase differences for the channels corresponding to the second target transmit antenna may include:
for the channels corresponding to the second target transmit antenna, calculating the second measured motion phase difference $\psi_2$ according to following equation if complex data of target distance Doppler unit position data of the channels corresponding to a first pulse signal of the pulse signals twice transmitted by the second target transmit antenna are respectively represented as $\chi_1, \chi_2, \chi_3, \cdots, \chi_n$ and complex data of target distance Doppler unit position data of the channels corresponding to a second pulse signal of the pulse signals twice transmitted by the second target transmit antenna are respectively represented as $\delta_1, \delta_2, \delta_3, \cdots, \delta_n$:

$$\psi_2 = \frac{\chi_1 \cdot \delta_1^* + \chi_2 \cdot \delta_2^* + \cdots + \chi_n \cdot \delta_n^*}{n}$$,

where, "*" is a conjugate operation, and n is the total number of channels corresponding to the second target transmit antenna.

In the present disclosure, in addition to obtaining the first measured moving phase difference $\psi_1$ and the second measured moving phase difference $\psi_2$ directly from the measured data, the first measured moving phase difference $\psi_1$ and the second measured moving phase difference $\psi_2$ can be calculated from a difference between the Chirp signal periods in the pulse sequences respectively corresponding to the first target transmit antenna and the second target transmit antenna. Since the pulse signals transmitted by the two antennas have the same waveforms and only the idle time in the Chirp signal periods may be different, the Fourier analysis of the echo signals may be not affected, and the analysis is specifically performed as follows.
The theoretical derivation principle and the related expression of the measured phase differences of the first target transmit antenna and the second target transmit antenna are described in detail below.
It is assumed that there is a following relationship between the signal period T1 of the pulse signal transmitted by the first target transmit antenna and the signal period T2 of the pulse signal transmitted by the second target transmit antenna:

$$\Delta T = T2 - T1$$,

Where, $\Delta T$ represents a difference between different signal periods of two pulse signals having the different signal periods among the pulse signals twice transmitted by the first target transmit antenna and the pulse signals twice transmitted by the second target transmit antenna, T1 represents the signal period of one of the pulse signals transmitted by the first target transmit antenna, and T2 represents the signal period of one of the pulse signals transmitted by the second target transmit antenna.
When the MIMO radar system transmits pulse signals in a time division manner, a phase difference between echo signals corresponding to pulse signals having adjacent transmission timings is mainly caused by array element spacing and a target moving speed, and the phase difference between the echo signals can be calculated according to following equation:

$$\psi = \exp(\mathrm{j}\cdot 2\pi \cdot \mathrm{d}\cdot \sin\theta) + \exp(\mathrm{j}\cdot 4\pi \cdot \mathrm{v}\cdot \mathrm{T}/\lambda)$$

Where, a first term of the right side of the equation is the phase difference caused by the array element spacing, the second term of the right side of the equation is the phase difference caused by a current speed of the moving target, j is a sign of the complex signal, d is the array element spacing, is a target angle, $\theta$ is the current speed of the moving target, $\lambda$ is a wavelength, and T represents a signal period of the transmitted pulse signal.

According to the waveform design of the present disclosure, because the array elements corresponding to the echo signals obtained by two transmissions of the same target antenna do not have array element spacing, the echo signals of the moving targets corresponding to the pulse signals twice transmitted by the same target transmit antenna only have a phase difference caused by a moving speed, and there is no phase difference caused by the array element spacing, where the first channel phase difference between the echo signals corresponding to the pulse signals twice transmitted by the first target transmit antenna satisfies following equation:

$$\psi_3 = \exp(\mathrm{j}\cdot 4\pi \cdot \mathrm{v}\cdot \mathrm{T}1/\lambda)_,$$

Where, $\psi_3$ represents the first channel phase difference, j represents a sign of the complex signal, v represents the current speed of the moving target, $\lambda$ represents the wavelength, and $T1$ represents the signal period of the pulse signal transmitted by the first target transmit antenna.

Similarly, the second channel phase difference between the echo signals corresponding to the pulse signals twice transmitted by the second target antenna satisfies following equation:

$$\psi_4 = \exp(\mathrm{j}\cdot 4\pi \cdot \mathrm{v}\cdot \mathrm{T}2/\lambda)_,$$

Where, $\psi_4$ represents the second channel phase difference, j represents a sign of the complex signal, v represents the current speed of the moving target, $\lambda$ represents the wavelength, and $T2$ represents the signal period of the pulse signal transmitted by the second target transmit antenna. As can be seen from the above that the measured phase differences of the first target transmit antenna and the second target transmit antenna are related to the signal periods of the pulse signals respectively transmitted by the first target transmit antenna and the second target transmit antenna and the speed of the moving target, respectively.

Further, the step 103 of calculating of the Doppler frequency of the moving target according to the first measured moving phase difference and the second measured moving phase difference may include:

calculating a differential phase difference according to following equation:

$$\Delta\psi = \psi_1^{*}\cdot\psi_2_,$$

where, $\Delta\psi$ represents the differential phase difference, $\psi_1$ represents the first measured moving phase difference, $\psi_2$ represents the second measured moving phase difference, and "*" is a conjugate operation.

A theoretically related expression of the difference phase difference is as follows:

$$\Delta\psi = \psi_3^{*}\cdot\psi_4 = \exp(\mathrm{j}\cdot 4\pi \cdot \mathrm{v}\cdot (T2-T1)/\lambda) = \exp(\mathrm{j}\cdot 4\pi \cdot \mathrm{v}\cdot \Delta T/\lambda)_,$$

Where, $\Delta\psi$ represents the differential phase difference, $\psi_3$ represents the channel phase difference corresponding to the first target transmit antenna, $\Psi_4$ represents the channel phase difference corresponding to the second target transmit antenna, j represents the sign of the complex signal, v represents the speed of the moving target, $T1$ represents the signal period of the pulse signal transmitted by the first target transmit antenna, $T2$ represents the signal period of the pulse signal transmitted by the second target transmit antenna, $\Delta T$ represents a difference between different signal periods of two pulse signals having the different signal periods among the pulse signals twice transmitted by the first target transmit antenna and the pulse signals twice transmitted by the second target transmit antenna, $\lambda$ represents the wavelength, and "*" is a conjugate operation.

Further, the step 103 of calculating of the Doppler frequency of the moving target according to the first measured moving phase difference and the second measured moving phase difference may further include:

calculating a phase angle of the differential phase difference; and
calculating the Doppler frequency of the moving target according to the phase angle.

Illustratively, a phase angle of a vector can be calculated by the differential phase difference to calculate the Doppler frequency from the phase angle.

Further, the step 103 of calculating of the Doppler frequency of the moving target according to the first measured moving phase difference and the second measured moving phase difference may further include:

calculating the Doppler frequency of the moving target according to following equation:

$$f_d = \frac{angle(\Delta\psi)}{2 \cdot \pi \cdot \Delta T},$$

where, $f_d$ represents the Doppler frequency of the moving target, and a function of angle() is to return a phase angle of a vector in radians, $\Delta\psi$ represents the differential phase difference, and $\Delta T$ represents a difference between different signal periods of pulse signals, having the different signal periods, among the pulse signals twice transmitted by the first target transmit antenna and the pulse signals twice transmitted by the second target transmit antenna.

Further, the step 104 of calculating of the current speed of the moving target according to the Doppler frequency may include:

calculating the current speed of the moving target according to following equation:

$$V = -f_d \cdot \lambda / 2,$$

where, V represents the current speed of the moving target, $f_d$ represents the Doppler frequency of the moving target, and $\lambda$ is the wavelength.

As can be seen from the above in the technical solution disclosed in the present disclosure that a range for measuring the maximum unambiguous speed of the moving target can be derived from following equation:

$$|4\pi \cdot v \cdot \Delta T / \lambda| \le \pi,$$

that is,

$$-\frac{\lambda}{4 \cdot \Delta T} \le V \le \frac{\acute{\lambda}}{4 \cdot \Delta T},$$

where, V represents a measurable speed of the moving target, $\Delta T$ represents a difference between signal periods of pulse signals, having different signal periods, among the pulse signals twice transmitted by the first target transmit antenna and the pulse signals twice transmitted by the second target transmit antenna, and $\lambda$ is the wavelength.

In contrast, in a conventional technical solution, when the radar system has N transmit antennas, assuming that the period of a single Chirp signal is T1 in one Burst period according to the classical TDM-MIMO radar waveform transmission mode, the measurable maximum unambiguous speed range $-\frac{\lambda}{4 \cdot N \cdot T1} \sim \frac{\lambda}{4 \cdot N \cdot T1}$ of the moving target that can be obtained from the calculation equation of the unambiguous speed range is . As can be seen from the above compared with the conventional technical solution that the technical solution disclosed in the present disclosure can increase the measurable unambiguous speed range by $\frac{N \cdot T1}{\Delta T}$ times, where the unambiguous speed range required by the radar design can be achieved by a value of the user-defined $\Delta T$.

Based on the same inventive concept as that of the moving target speed defuzzification method according to some embodiments of the present disclosure, some embodiments of the present disclosure further provide a moving target speed defuzzification apparatus applied to an MIMO radar. Referring to FIG.3, the apparatus may include:

a signal transmitting module 201 for driving a first target transmit antenna and a second target transmit antenna, having adjacent transmission timings, of a plurality of transmit antennas of a radar to each continuously transmit pulse signals twice in a same pulse sequence, where a signal period of one of the pulse signals twice transmitted by the first target transmit antenna is different from a signal period of one of the pulse signals twice transmitted by the second target transmit antenna;

a moving phase difference obtaining module 202 for obtaining a first measured moving phase difference corresponding to the first target transmit antenna and a second measured moving phase difference corresponding to the second target transmit antenna according to echo signals fed back by the same moving target;

a Doppler frequency calculating module 203 for calculating a Doppler frequency of the moving target according to the first measured moving phase difference and the second measured moving phase difference; and

a speed calculating module 204 for calculating a current speed of the moving target according to the Doppler frequency.

Illustratively, the moving phase difference obtaining module 202 is further configured to:

generate a Range-Doppler image of the channels corresponding to the first target transmit antenna and a Range-Doppler image of the channels corresponding to the second target transmit antenna according to the echo signals to perform non-coherent accumulation on the Range-Doppler images;

obtain first target distance Doppler unit position data of the moving target in the channels corresponding to the first target transmit antenna and second target distance Doppler unit position data of the moving target in the channels corresponding to the second target transmit antenna from the non-coherent accumulated Range-Doppler images; and

obtain the first measured moving phase difference according to complex data of the first target distance Doppler unit position data and the second measured moving phase difference according to complex data of the second target distance Doppler unit position data.

Illustratively, the moving phase difference obtaining module 202 is further configured to:

obtaining a plurality of moving phase differences for the channels corresponding to the first target transmit antenna according to the complex data of the first target distance Doppler unit position data in the channels to use an average value of the plurality of moving phase differences as the first measured moving phase difference; and

obtaining a plurality of moving phase differences for the channels corresponding to the second target transmit antenna according to the complex data of the second target distance Doppler unit position data in the channels to use an average value of the plurality of moving phase differences as the second measured moving phase difference.

Illustratively, the moving phase difference obtaining module 202 is further configured to:

for the channels corresponding to the first target transmit antenna, calculate the first measured moving phase difference $\psi_1$ according to following equation if complex data of target distance Doppler unit position data of the channels corresponding to a first pulse signal of the pulse signals twice transmitted by the first target transmit antenna are respectively represented as $\alpha_1, \alpha_2, \alpha_3, \cdots, \alpha_n$ and complex data of target distance Doppler unit position data of the channels corresponding to a second pulse signal of the pulse signals twice transmitted by the first target transmit antenna are respectively represented as $\beta_1, \beta_2, \beta_3, \cdots \beta_n$:

$$\psi_1 = \frac{\beta_1 \cdot \alpha_1^* + \beta_2 \cdot \alpha_2^* + \cdots + \beta_n \cdot \alpha_n^*}{n},$$

where, "*" is a conjugate operation, and n is the total number of channels corresponding to the first target transmit antenna.

Illustratively, the moving phase difference obtaining module 202 is further configured to:

for the channels corresponding to the second target transmit antenna, calculate the second measured motion phase difference $\psi_2$ according to following equation if complex data of target distance Doppler unit position data of the channels corresponding to a first pulse signal of the pulse signals twice transmitted by the second target transmit antenna are respectively represented as $\chi_1, \chi_2, \chi_3, \cdots, \chi_n$ and complex data of target distance Doppler unit position data of the channels corresponding to a second pulse signal of the pulse signals twice transmitted by the second target transmit antenna are respectively represented as $\delta_1, \delta_2, \delta_3, \cdots, \delta_n$:

$$\psi_2 = \frac{\chi_1 \cdot \delta_1^* + \chi_2 \cdot \delta_2^* + \cdots + \chi_n \cdot \delta_n^*}{n},$$

where, "*" is a conjugate operation, and n is the total number of channels corresponding to the second target transmit antenna.

Illustratively, the Doppler frequency calculating module 203 is further configured to:
calculate a differential phase difference according to following equation:

$$\Delta \psi = \psi_1^* \cdot \psi_2,$$

where, $\Delta\psi$ represents the differential phase difference, $\psi_1$ represents the first measured moving phase difference, $\psi_2$ represents the second measured moving phase difference, and "*" is a conjugate operation.

Illustratively, the Doppler frequency calculating module 203 is further configured to:

calculate a phase angle of the differential phase difference; and
calculate the Doppler frequency of the moving target according to the phase angle.

Illustratively, the Doppler frequency calculating module 203 is further configured to:
calculate the Doppler frequency of the moving target according to following equation:

$$f_d = \frac{angle(\Delta \psi)}{2 \cdot \pi \cdot \Delta T},$$

where, $f_d$ represents the Doppler frequency of the moving target, and a function of angle() is to return a phase angle of a vector in radians, $\Delta\psi$ represents the differential phase difference, and $\Delta T$ represents a difference between different signal periods of pulse signals, having the different signal periods, among the pulse signals twice transmitted by the first target transmit antenna and the pulse signals twice transmitted by the second target transmit antenna.

Illustratively, the Doppler frequency calculating module 204 is further configured to:
calculate the current speed of the moving target according to following equation:

$$V = -f_d \cdot \lambda / 2,$$

where, V represents the current speed of the moving target, $f_d$ represents the Doppler frequency of the moving target, and $\lambda$ is a wavelength.

Further, other aspects and implementation details of the moving target speed defuzzification apparatus and implementation details are the same as or similar to the moving target speed defuzzification method described previously, which is not repeatedly described again herein.

According to yet another aspect of the present disclosure, there is further provided an electronic device, including: a memory, a processor, and a computer program stored on the memory and executable on the processor, where the computer program, when executed by the processor, implements operations of any one of the moving target speed defuzzification methods described above.

According to yet another aspect of the present disclosure, there is further provided a storage medium having stored thereon a plurality of instructions adapted to be loaded by a processor to perform any of the moving target speed defuzzification methods described above.

In summary, although preferred embodiments have been described above in the present disclosure, the above-mentioned preferred embodiments are not intended to limit the present disclosure. Those of ordinary skilled in the art can make various modifications and changes without departing from the spirit and scope of the present disclosure. Therefore, the protection scope of the present disclosure is subject to the scope defined by the claims.

**Claims**

1. A moving target speed defuzzification method applied to an MIMO radar, comprising:

driving a first target transmit antenna and a second target transmit antenna, having adjacent transmission timings, of a plurality of transmit antennas of the radar to each continuously transmit pulse signals twice in a same pulse sequence, wherein a signal period of one of the pulse signals twice transmitted by the first target transmit antenna is different from a signal period of one of the pulse signals twice transmitted by the second target transmit antenna; obtaining a first measured moving phase difference corresponding to the first target transmit antenna and a second measured moving phase difference corresponding to the second target transmit antenna based on one or more echo signals fed back by a same moving target;
calculating a Doppler frequency of the moving target based on the first measured moving phase difference and the second measured moving phase difference; and
calculating a current speed of the moving target based on the Doppler frequency.

2. The method of claim 1, wherein the obtaining of the first measured moving phase difference and the second measured moving phase difference comprises:

generating a Range-Doppler image of channels corresponding to the first target transmit antenna and a Range-Doppler image of channels corresponding to the second target transmit antenna based on the echo signals to perform non-coherent accumulation on the Range-Doppler images;
obtaining first target distance Doppler unit position data of the moving target in the channels corresponding to the first target transmit antenna and second target distance Doppler unit position data of the moving target in the channels corresponding to the second target transmit antenna from the non-coherent accumulated Range-Doppler images; and
obtaining the first measured moving phase difference based on complex data of the first target distance Doppler unit position data and the second measured moving phase difference based on complex data of the second target distance Doppler unit position data.

3. The method of claim 2, wherein the obtaining of the first measured moving phase difference based on the complex data of the first target distance Doppler unit position data and the second measured moving phase difference based on the complex data of the second target distance Doppler unit position data comprises:

obtaining a plurality of moving phase differences for the channels corresponding to the first target transmit antenna based on the complex data of the first target distance Doppler unit position data in the channels to use an average value of the plurality of moving phase differences corresponding to the first target transmit antenna as the first measured moving phase difference; and
obtaining a plurality of moving phase differences for the channels corresponding to the second target transmit antenna based on the complex data of the second target distance Doppler unit position data in the channels to use an average value of the plurality of moving phase differences corresponding to the second target transmit antenna as the second measured moving phase difference.

4. The method of claim 3, wherein the obtaining of the plurality of moving phase differences for the channels corresponding to the first target transmit antenna comprises:
for the channels corresponding to the first target transmit antenna, calculating the first measured moving phase difference $\psi_1$ base on following equation if complex data of target distance Doppler unit position data of the channels corresponding to a first pulse signal of the pulse signals twice transmitted by the first target transmit antenna are respectively represented as $\alpha_1, \alpha_2, \alpha_3, \cdots, \alpha_n$ and complex data of target distance Doppler unit position data of the channels corresponding to a second pulse signal of the pulse signals twice transmitted by the first target transmit antenna are respectively represented as $\beta_1, \beta_2, \beta_3, \cdots \beta_n$:

$$\psi_1 = \frac{\beta_1 \cdot \alpha_1^* + \beta_2 \cdot \alpha_2^* + \cdots + \beta_n \cdot \alpha_n^*}{n},$$

wherein, "*" is a conjugate operation, and n is a total number of channels corresponding to the first target transmit antenna.

5. The method of claim 4, wherein the obtaining of the plurality of moving phase differences for the channels corresponding to the second target transmit antenna comprises:
for the channels corresponding to the second target transmit antenna, calculating the second measured motion phase difference $\psi_2$ based on following equation if complex data of target distance Doppler unit position data of the channels corresponding to a first pulse signal of the pulse signals twice transmitted by the second target transmit antenna are respectively represented as $\chi_1, \chi_2, \chi_3, \cdots, \chi_n$ and complex data of target distance Doppler unit position data of the channels corresponding to a second pulse signal of the pulse signals twice transmitted by the second target transmit antenna are respectively represented as $\delta_1, \delta_2, \delta_3, \cdots, \delta_n$:

$$\psi_2 = \frac{\chi_1 \cdot \delta_1^{\,*} + \chi_2 \cdot \delta_2^{\,*} + \cdots + \chi_n \cdot \delta_n^{\,*}}{n},$$

wherein, "*" is a conjugate operation, and n is a total number of channels corresponding to the second target transmit antenna.

6. The method of claim 5, wherein the calculating of the Doppler frequency of the moving target based on the first measured moving phase difference and the second measured moving phase difference comprises:
calculating a differential phase difference based on following equation:

$$\Delta\psi = \psi_1^{\,*} \cdot \psi_2,$$

wherein, $\Delta\psi$ represents the differential phase difference, $\psi_1$ represents the first measured moving phase difference, $\psi_2$ represents the second measured moving phase difference, and "*" is a conjugate operation.

7. The method of claim 6, wherein the calculating of the Doppler frequency of the moving target based on the first measured moving phase difference and the second measured moving phase difference further comprises:

calculating a phase angle of the differential phase difference; and
calculating the Doppler frequency of the moving target based on the phase angle.

8. The method of claim 7, wherein the calculating of the Doppler frequency of the moving target based on the first measured moving phase difference and the second measured moving phase difference further comprises:
calculating the Doppler frequency of the moving target based on following equation:

$$f_d = \frac{angle(\Delta\psi)}{2 \cdot \pi \cdot \Delta T},$$

wherein, $f_d$ represents the Doppler frequency of the moving target, and a function of angle() is to return a phase angle of a vector in radians, $\Delta\psi$ represents the differential phase difference, and $\Delta T$ represents a difference between different signal periods of pulse signals, having the different signal periods, among the pulse signals twice transmitted by the first target transmit antenna and the pulse signals twice transmitted by the second target transmit antenna.

9. The method of claim 8, wherein the calculating of the current speed of the moving target based on the Doppler frequency comprises:
calculating the current speed of the moving target based on following equation:

$$V = -f_d \cdot \lambda / 2,$$

wherein, V represents the current speed of the moving target, $f_d$ represents the Doppler frequency of the moving target, and $\lambda$ is a wavelength.

10. A moving target speed defuzzification apparatus applied to an MIMO radar, comprising:

a signal transmitting module for driving a first target transmit antenna and a second target transmit antenna, having adjacent transmission timings, of a plurality of transmit antennas of a radar to each continuously transmit pulse signals twice in a same pulse sequence, wherein a signal period of one of the pulse signals twice transmitted by the first target transmit antenna is different from a signal period of one of the pulse signals twice transmitted by the second target transmit antenna;
a moving phase difference obtaining module for obtaining a first measured moving phase difference corresponding to the first target transmit antenna and a second measured moving phase difference corresponding to the second target transmit antenna based on one or more echo signals fed back by a same moving target;
a Doppler frequency calculating module for calculating a Doppler frequency of the moving target based on the first measured moving phase difference and the second measured moving phase difference; and

a speed calculating module for calculating a current speed of the moving target based on the Doppler frequency.

11. An electronic device, comprising: a memory, a processor, and a computer program stored on the memory and executable on the processor, wherein the computer program, when executed by the processor, implements the moving target speed defuzzification method of any one of claims 1-9.

12. A non-transitory computer readable storage medium having stored a computer program thereon which, when executed by a processor, implements the moving target speed defuzzification method of any one of claims 1-9.

Driving a first target transmit antenna and a second target transmit antenna, having adjacent transmission timings, of a plurality of transmit antennas of a radar to each continuously transmit pulse signals twice in a same pulse sequence, where a signal period of one of the pulse signals twice transmitted by the first target transmit antenna is different from a signal period of one of the pulse signals twice transmitted by the second target transmit antenna — 101

Obtaining a first measured moving phase difference corresponding to the first target transmit antenna and a second measured moving phase difference corresponding to the second target transmit antenna according to echo signals fed back by the same moving target — 102

Calculating a Doppler frequency of the moving target according to the first measured moving phase difference and the second measured moving phase difference — 103

Calculating a current speed of the moving target according to the Doppler frequency — 104

FIG. 1

FIG.2

| Signal transmitting module | Moving phase difference obtaining module | Doppler frequency calculating module | Speed calculating module |

201  202  203  204

FIG. 3

## INTERNATIONAL SEARCH REPORT

| International application No. |
|---|
| **PCT/CN2022/086844** |

| A. | CLASSIFICATION OF SUBJECT MATTER |
|---|---|

G01S 13/58(2006.01)i;  G06F 17/18(2006.01)i

According to International Patent Classification (IPC) or to both national classification and IPC

| B. | FIELDS SEARCHED |
|---|---|

Minimum documentation searched (classification system followed by classification symbols)

G01S; G06F

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 超星, CHAOXING; VEN; USTXT; EPTXT; WOTXT; IEEE: 解, 速度, 模糊, 多普勒, 时序, 相邻, 相位差, MIMO, TDM, RD, velocity, ambiguity, phase, doppler

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114137508 A (NANJING TENON EYE ELECTRONIC TECHNOLOGY LIMITED COMPANY) 04 March 2022 (2022-03-04) description, paragraphs [0006]-[0082] | 1-12 |
| A | CN 113093131 A (HUAWEI TECHNOLOGIES CO., LTD.) 09 July 2021 (2021-07-09) description, paragraphs [0004]-[0053] | 1-12 |
| A | CN 113777577 A (HAWKEYE TECHNOLOGY CO., LTD. et al.) 10 December 2021 (2021-12-10) entire document | 1-12 |
| A | CN 108535730 A (QINGHAI UNIVERSITY) 14 September 2018 (2018-09-14) entire document | 1-12 |
| A | CN 110161504 A (GM GLOBAL TECH OPERATIONS L.L.C. et al.) 23 August 2019 (2019-08-23) entire document | 1-12 |
| A | CN 111308437 A (NANJING HURYS INTELLIGENCE TECHNOLOGY CO., LTD.) 19 June 2020 (2020-06-19) entire document | 1-12 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 September 2022** | **26 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/086844**

| Patent document cited in search report | | | Publication date (day/month/year) | Patent family member(s) | | | Publication date (day/month/year) |
|---|---|---|---|---|---|---|---|
| CN | 114137508 | A | 04 March 2022 | CN | 114137508 | B | 26 April 2022 |
| CN | 113093131 | A | 09 July 2021 | WO | 2021129581 | A1 | 01 July 2021 |
| CN | 113777577 | A | 10 December 2021 | CN | 113777577 | B | 08 February 2022 |
| CN | 108535730 | A | 14 September 2018 | CN | 108535730 | B | 29 September 2020 |
| CN | 110161504 | A | 23 August 2019 | US | 2019250249 | A1 | 15 August 2019 |
| | | | | DE | 102019103684 | A1 | 22 August 2019 |
| | | | | US | 10754008 | B2 | 25 August 2020 |
| CN | 111308437 | A | 19 June 2020 | WO | 2021169085 | A1 | 02 September 2021 |
| | | | | CN | 111308437 | B | 22 March 2022 |

Form PCT/ISA/210 (patent family annex) (January 2015)